# EUROPÄISCHE PATENTSCHRIFT

(11) **EP 2 410 875 B1**
(45) Veröffentlichungstag und Bekanntmachung des Hinweises auf die Patenterteilung: **24.10.2012**
(21) Anmeldenummer: 10710272.5
(22) Anmeldetag: 15.03.2010
(51) Int. Cl.: F26B 21/06, A23L 1/16, F26B 3/00, F26B 15/12

(54) **VERFAHREN UND VORRICHTUNG ZUM TROCKNEN VON GÜTERN**
METHOD AND DEVICE FOR DRYING GOODS
PROCÉDÉ ET DISPOSITIF POUR LE SÉCHAGE DE PRODUITS

(30) Priorität: 23.03.2009 DE 102009014020
(43) Veröffentlichungstag der Anmeldung: 01.02.2012
(73) Patentinhaber: Bühler AG, 9240 Uzwil (CH)
(72) Erfinder: MÜHLHERR, Christian, 78462 Konstanz (DE); LIEBERHERR, Kurt, CH-9500 Wil (CH)
(74) Vertreter: Hepp Wenger Ryffel AG
(86) Internationale Anmeldenummer: PCT/EP2010/053279
(87) Internationale Veröffentlichungsnummer: WO 2010/108806

(56) Entgegenhaltungen:
- EP-A1- 0 510 342
- US-A- 1 551 818
- US-A- 4 473 593
- DATABASE FSTA [Online] INTERNATIONAL FOOD INFORMATION SERVICE (IFIS), FRANkFURT-MAIN, DE; 2008, HUI Y H ET AL: XP002588384 Database accession no. FS-2008-06-Ea0401

## Beschreibung

Die Erfindung betrifft ein Verfahren zum Trocknen von Teigwaren, insbesondere zur Konvektionstrocknung von Teigwaren, wobei die Teigwaren von einer ersten Behandlungszone in eine zweite Behandlungszone eingebracht werden. Ferner betrifft die Erfindung eine Vorrichtung zum Trocknen von Teigwaren, insbesondere zur Konvektionstrocknung von Teigwaren, mit wenigstens zwei Behandlungszonen durch die die Teigwaren transportiert werden.

Teigwaren, insbesondere Langwaren wie z.B. Spaghetti, verlassen einen Pressenkopf in Form von weichen, feucht-plastischen Teigsträngen und werden bis zur Endtrocknung hängend durch unterschiedlich aufgeheizte Behandlungszonen geführt und nach Abschluss des Trocknungsvorgangs in eine Stabilisationszone, eine Auffeuchtzone oder eine Kühlzone eingebracht und formstabilisiert. Während des Trocknungsvorgangs soll der Wasserentzug aus den Teigwaren so gesteuert werden, dass die Trocknung von aussen nach innen fortschreitet, so dass die Oberfläche nicht vor dem Kern erhärtet, um Risse und Sprünge in der fertigen Teigware zu vermeiden. Das heisst, die Oberfläche soll nicht vor dem Kern erhärten, und das Feuchtigkeitsgefälle zwischen den Schichten soll begrenzt bleiben. Das Trocknen der geformten Langwaren ist der letzte und technisch anspruchvollste Abschnitt der Langwarenherstellung. Ein Trocknen bei zu hoher Lufttemperatur, zu geringer relativer Luftfeuchtigkeit und zu starker Luftumwälzung verursacht Schwindungsspannungen, die später Risse, Sprünge und Bruch sowie ein Zerfallen der trockenen Teigwaren oder ein zerfallen beim Kochen hervorrufen können.

Für die Trocknung der Teigwaren werden in der Praxis Konvektionstrockner eingesetzt, wobei die Trocknungsbedingungen, d.h. Temperatur und relative Feuchtigkeit des Trocknungsmediums (Luft) über die Trocknerlänge variieren. Der Trockner ist in Behandlungszonen unterteilt. Derart aufgebaute Vorrichtungen verbrauchen für das Trocknungsverfahren sehr viel Energie und Zeit. Da die Behandlungszonen in einer Linie aufgebaut sind, benötigen die Anlagen für dieses Trocknungsverfahren sehr grosse Stellflächen in den Produktionsräumen.

Ein derartiges Verfahren ist auch aus dem Dokument EP 0 129 892 B1 bekannt. Eine Trocknungsanlage besteht aus einer ersten Behandlungszone, einer Schnellaufheizzone, mit einer ersten Behandlungszone bzw. Klimazone, in der das Gut möglichst schnell aufgeheizt wird. Dann folgt eine mehrstündige Schwitzperiode, in der das Restwasser gleichmässig vom Kern des Gutes über den gesamten Querschnitt verteilt wird. Die sich anschliessende Trocknung erfolgt langsamer und schonender als die Vortrockung in einer zweiten Behandlungszone, einer Intensivtrocknungszone, mit einer zweiten Klimazone. Das Gut wird in der ersten Behandlungszone in einer Zeitdauer zwischen 15 und 30 Minuten und unter Einwirkung eines Aufheizmediums mit einer relativen Feuchtigkeit von 60 bis 85% auf eine Temperatur von mehr als 80°C aufgeheizt. In der zweiten Behandlungszone wird das Gut unter Einwirkung eines Trocknungsmediums mit einer Temperatur von über 80°C und einer relativen Feuchtigkeit von 65 bis 85% auf eine Feuchtigkeit von etwa 14 Gew.-% getrocknet. Zur Vermeidung unerwünschter Reaktionen kann das Gut zunächst über 80°C auf einen Feuchtigkeitsgehalt von weniger als 18 Gew.-% und anschliessend bei einer niedrigen Temperatur auf eine Endfeuchtigkeit von weniger als 14 Gew.-% getrocknet werden. Bei diesem Trocknungsverfahren ist die zu trocknende Teigware jedoch nicht über den gesamten Querschnitt in gummiartigem Zustand, sondern nur im Kern, während die Oberfläche der Teigware während des Trocknungsvorgangs schon in glasartigem Zustand ist. Deswegen ist eine relativ lange Stabilisierungsphase erforderlich, um entstandene Feuchtegradienten, bzw. Spannungen in den Teigwaren abzubauen. Dies erfordert eine zusätzliche Produktionszeitverlängerung.

Das Dokument DE 44 24 846 A1 offenbart einen Trockner für Kunststoffgranulat, bei dem die trockene Zuluft vor dem Eintritt in einen Vorratsbehälter an einem Wärmetauscher vorbei geführt wird. Die in eine Rückluftleitung strömende, erwärmte und mit Feuchtigkeit beladene Rückluft überträgt einen Teil der Wärme über den Wärmetauscher auf die Zuluft. Eine Heizeinrichtung erwärmt die Trockenluft auf die zum Trockenvorgang erforderliche Temperatur, bevor sie in den Vorratsbehälter, der bereits die zu trocknenden Güter enthält, eintritt. Die in die Rückluftleitung strömende Rückluft erwärmt die über die Trockenzuluftleitung herangeführte trockene Luft, so dass entsprechend weniger Heizenergie über die Heizeinrichtung zugeführt werden muss. Der konstruktive Aufbau dieser Vorrichtung ermöglicht nur eine eingeschränkte Wärmerückgewinnung.

Der Erfindung liegt die Aufgabe zu Grunde, ein Verfahren sowie eine Vorrichtung der eingangs genannten Gattung dahingehend zu verbessern, dass der Trockner konstruktiv einfach, kostengünstig und platzsparend aufgebaut ist sowie der Trocknungsprozess effizient geführt werden kann.

Diese Aufgabe wird erfindungsgemäss gelöst mit einem Verfahren mit den Merkmalen des Anspruchs 1.

Die Temperatur ist im Durchschnitt über die erste Behandlungszone niedriger als in der zweiten Behandlungszone und die aus der Abluft der ersten und/oder zweiten Behandlungszone in wenigstens einem ausserhalb der Behandlungszonen angeordneten Wärmetauscher gewonnene Energie wird zumindest teilweise in die erste Behandlungszone eingebracht. Dadurch ist, bezogen auf die thermische Heizleistung, im Vergleich zum herkömmlichen Verfahren eine Energieeinsparung für das gesamte Trocknungsverfahren von ca. 60% möglich. Des Weiteren bietet dieses Trocknungsverfahren den Vorteil, dass die Trocknung der Teigwaren, insbesondere die Konvektionstrocknung von Teigwaren, von aussen nach innen so fortschreitet, dass die Oberfläche nicht vor dem Kern erhärtet und somit Risse und Sprünge in den Teigwaren vermieden werden.

Vorzugsweise bleibt die gesamte Oberfläche der zu trocknenden Teigwaren in einem gummiartigen Zustand. Dadurch lässt sich nicht nur das Ausmass von Schwindungsspannungen sondern auch das Auftreten von Maillard-Reaktionen während des Trocknungsvorgangs verringern; siehe hierzu auch die Patentanmeldungen DE 10 2008 002 334 und WO 2009/150192 vom gleichen Anmelder, die in die vorliegende Beschreibung durch Bezugnahme eingeschlossen werden. Dies wirkt sich besonders positiv auf die Kocheigenschaften und Verfärbungen der Teigwaren aus.

Bei dem in WO 2009/150192 beschriebenen Verfahren zum Trocknen von Teigwaren durchlaufen die als Rohteig-Gebilde vorliegenden Teigwaren während des Trocknungsvorgangs Zustände an der Oberfläche, die verschiedene Wertepaare aus Temperatur der Oberfläche und Feuchtigkeit der Oberfläche aufweisen. Dabei kann die Temperatur der Oberfläche des Rohteig-Gebildes nicht mehr als 40 °C über der Temperatur auf der Glasübergangskurve des Rohteigs in Punkt gleicher Feuchtigkeit der Oberfläche liegen. Entsprechend kann auch beim erfindungsgemässen Verfahren die Temperatur in der zweiten Behandlungszone nicht mehr als 40 °C über der Temperatur auf der Glasübergangskurve im Punkt gleicher Feuchtigkeit der Oberflächen liegen. Selbst mit dieser Einschränkung an die Temperatur lohnt sich die Einbringung der Energie in die erste Behandlungszone, die mit dem Wärmetauscher gewonnen wurde.

Vorteilhafterweise wird ein Trocknungsmedium, insbesondere Luft, in der ersten und/oder zweiten Behandlungszone an wenigstens einem in der Behandlungszone angeordneten Wärmeübertrager vorbei geführt und erhitzt. Dieses Trocknungsmedium trocknet die Teigwaren, die von einer ersten Behandlungszone in die zweite Behandlungszone eingebracht werden. Der Wärmetauscher ermöglicht die Weiterleitung der aus anderen Verfahrensschritten gewonnenen Energie an das Trocknungsmedium. Dies führt zu einer Energieeinsparung im gesamten Verfahren.

Denkbar ist es, dass die Teigwaren durch mehr als zwei Behandlungszonen geführt werden, um den Trocknungsprozess an bestimmte Anforderungen anzupassen.

In einem günstigen Ausführungsbeispiel kann in der ersten Behandlungszone in Produktflussrichtung die Temperatur des Trocknungsmediums ansteigen, die Temperatur der Teigwaren und die absolute Feuchtigkeit des Trocknungsmediums ansteigen und der Wassergehalt der Teigwaren sinken. Kleine Temperatursprünge innerhalb der Behandlungszone können ein Verkleben der zu trocknenden Teigwaren verhindern.

In einer weiteren Ausführungsform kann in der zweiten Behandlungszone in Produktflussrichtung die Temperatur des Trocknungsmediums verändert werden, wobei die Temperatur insbesondere ansteigt. Ferner kann die Temperatur der Teigwaren und die absolute Feuchtigkeit des Trocknungsmediums ansteigen und der Wassergehalt der Teigwaren kann sinken. Durch die Anpassung der Temperatur des Trocknungsmediums ist es möglich, die zu trocknenden Teigwaren während des gesamten Trocknungsprozesses in einem für die Erfüllung der Qualitätsanforderungen optimalen Temperaturbereich zu halten.

In einer besonders vorteilhaften Ausführungsform der vorliegenden Erfindung kann am Ende der ersten Behandlungszone eine höhere Temperatur herrschen als am Anfang der ersten Behandlungszone. Ferner kann am Ende der zweiten Behandlungszone eine tiefere oder gleich hohe oder höhere Temperatur herrschen als am Anfang der zweiten Behandlungszone. Diese Vorgehensweise gewährleistet einen auf die Produktqualität ausgerichteten Trocknungsprozess der Teigwaren. In Abhängigkeit von der gewünschten Produktqualität (Farbe, Kocheigenschaften, usw.), der Art und Beschaffenheit der eingesetzten Rohmaterialien (Hartweizengriess, Weichweizenmehl, usw.) und der zugesetzten Additive (Eier, Tomatenpulver, Spinatpulver, usw.) kann ein unterschiedlicher Temperaturverlauf angewendet werden.

Um die Wärmeenergie in den Behandlungszonen zurückzugewinnen, kann dem wenigstens einen Wärmeübertrager in der ersten Behandlungszone Wasser zugeführt werden, welches über wenigstens einen Wärmetauscher von der Abluft der ersten und/oder zweiten Behandlungszone erwärmt wird. Dadurch ist eine besonders effiziente Energierückgewinnung innerhalb des Prozesses möglich.

Denkbar ist es, dem Wasser, welches den Wärmeübertragern in der ersten und/oder zweiten Behandlungszone zugeführt wird, konventionell erhitztes, d.h. heisseres Wasser beizumischen, um dadurch die von den Wärmeübertragern in den Behandlungszonen an das Trocknungsmedium abgegebene Wärme zu erhöhen. Dadurch erhöht sich die Temperatur in den jeweiligen Bereichen der Behandlungszonen.

Denkbar ist es, dass die in der ersten und/oder zweiten Behandlungszone vorhandene Energie das für die Teigbereitung benötigte Speisewasser und/oder weitere Zonen des Trockners, insbesondere eines Behängers, erhitzt. Dadurch kann eine externe Energiezuführung in diesen Bereichen eingespart werden.

In einer weiteren Ausführungsform der vorliegenden Erfindung können die den Haupttrockner verlassenden Teigwaren in eine Stabilisationszone und/oder Auffeuchtzone und/oder Kühlzone eingebracht werden. In diesen Zonen können die Teigwaren optimal auf den anschliessenden Lagerprozess vorbereitet werden.

Die in der ersten und/oder zweiten Behandlungszone angeordneten inneren Wärmeübertrager sind in Serie geschaltet und werden von einem Fluid, insbesondere Wasser entgegen der Produktflussrichtung durchströmt. Die letzten Bereiche der Behandlungszonen in Produktflussrichtung weisen dann eine höhere Temperatur als die ersten Bereiche auf. D.h., die Teigwaren weisen ebenfalls in diesen Bereichen höhere Temperaturen auf.

Die Temperatursprünge zwischen Milieus in der ersten und/oder zweiten Behandlungszone sind nur klein und den aufeinander folgenden Wärmeübertragern in den Behandlungszonen zugeordnet. Insbesondere sind diese Temperatursprünge nicht grösser als 12°C, vorzugsweise nicht grösser als 8°C und besonders bevorzugt nicht grösser als 4°C. Die geringen Temperatursprünge verhindern ein Verkleben der durch die Behandlungszonen geführten Teigwaren während des Trocknungsprozesses.

Die der zweiten Behandlungszone zugeführte Frischluft kann zumindest teilweise der Abluft der ersten Behandlungszone entnommen werden. Vorzugsweise wird die Abluft aus der ersten Behandlungszone an deren Ende abgesaugt, da sie in diesem Milieu die höchste Temperatur aufweist und die Rückgewinnung dieser Energie ein grosses Potential aufweist. Durch das Absaugen der Abluft aus der ersten Behandlungszone wird die relative Luftfeuchte zumindest im letzten Milieu der ersten Behandlungszone in Produktflussrichtung geregelt oder gesteuert.

Die relative Luftfeuchte kann zumindest im in Produktflussrichtung letzten Milieu der zweiten Behandlungszone geregelt und/oder gesteuert werden. Dies kann durch Absaugen der Abluft der zweiten Behandlungszone erfolgen.

Die eingangs genannte Aufgabe wird ferner mit einer Vorrichtung mit den Merkmalen des Anspruchs 11 gelöst.

In der ersten und/oder zweiten und/oder mehreren Behandlungszonen ist jeweils wenigstens ein Wärmeübertrager angeordnet. Dieser Wärmeübertrager ist ein Wasser-Luft-Wärmetauscher. Die in den Behandlungszonen angeordneten Wärmeübertrager ermöglichen die Weiterleitung der mit ausserhalb der Behandlungszonen angeordneten Wärmetauschern aus der Abluft bzw. Abwasser zurückgewonnenen Energie in den Trocknungsprozess. Dadurch wird eine grosse Energieeinsparung der von aussen zuzuführenden Energie für den Trocknungsprozess erreicht.

In einer besonders vorteilhaften Ausführungsform der Erfindung ist die erste der zwei Behandlungszonen eine Aufheizzone und die zweite Behandlungszone eine Trockenzone. Die zu trocknenden Teigwaren erfahren in diesen beiden Zonen unterschiedliche Behandlungstemperaturen, die an die geforderte Produktqualität angepasst werden können.

Die erste und/oder die zweite Behandlungszone kann jeweils wenigstens einen Wärmeübertrager oder mehrere in Serie angeordnete innere Wärmeübertrager aufweisen. Die Wärmeübertrager leiten die aus den Trocknungsprozessen zurückgewonnene Wärme an das Trocknungsmedium weiter. Mehrere in Serie angeordnete Wärmeübertrager ermöglichen optimal geringe Temperatursprünge von einem Wärmeübertrager zu dem nächsten Wärmeübertrager, wodurch ein Verkleben der Teigwaren in diesem Bereich des Trocknungsprozesses verhindert werden kann.

In einer günstigen Ausführungsform kann wenigstens ein äusserer Wärmetauscher der ersten und/oder zweiten Behandlungszone nachgeordnet sein, um die in der Behandlungszone vorhandene Wärme bzw. Energie aufzunehmen und deren Rückgewinnung zu ermöglichen.

Bei einer Variante der Erfindung kann die von der ersten Behandlungszone und/oder der zweiten Behandlungszone abgeführte Abluft in dem/den äusseren Wärmetauscher(n) verarbeitet werden, wobei die in dem Wärmetauscher gewonnene Energie in den bzw. die inneren Wärmeübertrager der ersten und/oder zweiten Behandlungszone rückführbar ist. Somit ermöglicht der äussere Wärmetauscher die Rückgewinnung der in den Behandlungszonen vorhandenen Energie. Dadurch kann die Energieeinsparung in der gesamten Anlage durch die Wärmerückgewinnung erhöht werden.

Vorteilhafterweise ist die Vorrichtung derart ausgebildet, dass die der zweiten Behandlungszone zuzuführende Frischluft der Abluft der ersten Behandlungszone entnehmbar ist. Vorzugsweise wird die Abluft aus dem Ende der ersten Behandlungszone abgesaugt, da sie hier die höchste Temperatur aufweist und die grösstmögliche Energierückgewinnung ermöglicht.

Durch das Absaugen der Abluft aus der ersten Behandlungszone kann die relative Luftfeuchte zumindest im in Produktflussrichtung letzten Milieu der ersten Behandlungszone regel- und/oder steuerbar sein.

Weitere Vorteile für die Energierückgewinnung ergeben sich, wenn die relative Luftfeuchte zumindest im in Produktflussrichtung letzten Milieu der zweiten Behandlungszone durch Absaugen der Abluft der zweiten Behandlungszone regel- und/oder steuerbar ist.

Weitere vorteilhafte Weiterbildungen der Erfindung sind in den Unteransprüchen definiert.

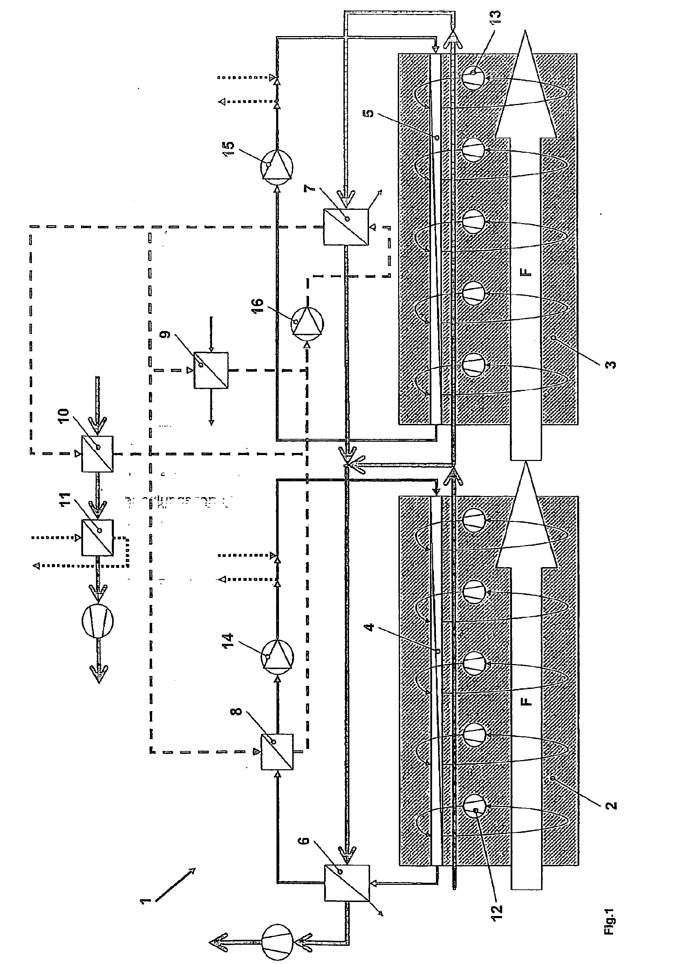

Eine bevorzugte Ausführungsform der vorliegenden Erfindung wird nun mit Hilfe der Figur erläutert, wobei Fig. 1 eine Konzeptskizze der Vorrichtung zeigt.

Die vorliegende Erfindung ermöglicht die Trocknung von Teigwaren während sich deren gesamter Querschnitt im gummiartigen Zustand befindet, wobei die Glasübergangstemperatur von Weizenstärke und -protein in den Teigwaren berücksichtigt wird. Diese Glasübergangstemperatur beschreibt einen Bereich, in welchem der Übergang vom gummiartigen in den glasartigen Zustand stattfindet. Während des Verfahrens werden die Parameter der Trocknungsbedingungen so gewählt, dass während des gesamten Trocknungsprozesses auch die Oberflächen der Teigwaren im gummiartigen Zustand bleiben. Dadurch kann die Trocknung beschleunigt werden, da die Feuchtigkeitsdiffusion des in den Teigwaren gebundenen Wassers im gummiartigen Zustand höher ist als im glasartigen Zustand. Des Weiteren kann die an den Trocknungsprozess anschliessende Stabilisierungsphase verkürzt werden, da die Spannungen in den Teigwaren im gummiartigen Zustand besser abgebaut werden können.

Das Verfahren zum Trocknen von Teigwaren, insbesondere zur Konvektionstrocknung von Teigwaren, findet in einem Trockner 1 statt, der aus mindestens zwei Behandlungszonen 2,3 besteht. Die erste Behandlungszone 2 ist eine Aufheizzone und die zweite Behandlungszone 3 ist ein Haupttrockner. Ferner weist der Trockner eine Stabilisationszone, eine Auffeuchtzone und eine Kühlzone auf. Im Inneren der Behandlungszonen 2,3 sind mehrere Wärmetauscher 4,5 angeordnet, die nachfolgend mit "Wärmeübertrager" bezeichnet sind. Die ausserhalb der Behandlungszonen 2,3 in der Vorrichtung 1 angeordneten Wärmetauscher sind mit "Wärmetauscher" 6,7,8,9,10,11 bezeichnet.

In dem Trockner 1 werden Langwaren, d.h. Spaghetti getrocknet, die nach Verlassen eines Pressenkopfes auf einer Stabbehängevorrichtung durch den Trockner 1 geführt werden. In der ersten Behandlungszone 2, der Aufheizzone, werden die Teigwaren kontinuierlich von ca. 40°C und ca. 28% H₂O auf ca. 70 bis 90°C und bevorzugt auf 75°C und 20% H₂O aufgeheizt und getrocknet. Diese Aufheizzone 2 weist mehrere Wasser-Luft-Wärmetauscher, nachfolgend Wärmeübertrager 4, in Serie auf, wodurch das Trocknungsmedium, z.B. Luft, kontinuierlich dem Produktfluss F folgend von ca. 42°C und 80% relative Feuchte kontinuierlich auf ca. 80°C und 80% relative Feuchte aufgeheizt wird. Durch die mehrere in Serie angeordneten Wärmeübertrager 4 werden kleine Temperatursprünge ermöglicht.

Der Vorlauf der Aufheizzone 2, d.h. das Heizwasser vor den Wasser-Luft-Wärmetauschern 4 des letzten Elements bzw. Milieus der Aufheizzone 2 in Produktförderrichtung F weist die höchste Temperatur auf. Diese Temperatur liegt zwischen 75 und 95°C und bevorzugt bei ca. 84°C. Diese Temperatur wird von mehreren Energieströmen erbracht:
1. Das Wasser des Rücklaufs der Aufheizzone 2, d.h. das Heizwasser nach den Wasser-Luft-Wärmetauschern 4, wird durch einen Luft-Wasser-Wärmetauscher 6 und dann durch einen Wasser-Wasser-Wärmetauscher 8 aufgeheizt.
2. Die Abluft des Haupttrockners 3 wird für die Erwärmung des Wasser genutzt, welches über einen Luft-Wasser-Wärmetauscher 7 und einen Wasser-Wasser-Wärmetauscher 8 eine Temperatur von ca. 80°C erhält und
3. um die erforderliche Vorlauftemperatur der Aufheizzone 2, d.h. das Heizwasser vor den Wasser-Luft-Wärmetauschern 4, zu erreichen wird zusätzliches heisses Wasser mit einer Temperatur von ca. 130°C zugeführt und mit dem ca. 80°C warmen Wasser gemischt.

Das Heizwasser strömt durch die Aufheizzone 2 dem Produktfluss F entgegen durch die Wasser-Luft-Wärmetauscher 4, die in Serie angeschlossen sind. Mehrere Ventilatoren 12 bewegen das Trocknungsmedium, die Luft, welche durch die in Serie angeschlossenen Wärmetauscher 4 kontinuierlich aufgeheizt wird. Die Wärmetauscher 4 sind so gross dimensioniert, dass mit kleinen Temperaturdifferenzen zwischen Wasser und Luft die benötigte Heizleistung ausgetauscht werden kann. Der serielle Wärmetauscher-Anschluss ergibt bei kleinem Wasserfluss eine hohe Temperaturdifferenz des Heizwassers. Dadurch ergibt sich eine relativ tiefe Rücklauftemperatur.

Die benötigte Frischluft wird vorzugsweise direkt aus einem Behänger in den Trockner 1 gesaugt. Da am Ende der Aufheizzone 2 ein Teil der Abluft geregelt aus dem Trockner 1 abgesaugt wird, wird die relative Luftfeuchte im letzten Milieu geregelt. Das Wasser zum Heizen der Aufheizzone 2 wird mit einer Pumpe 14 ständig umgewälzt. Die Temperatur im letzten Milieu der Aufheizzone 2, d.h. am Ende der Produktflussrichtung F, kann durch Entnahme von kaltem Wasser und Beimischen von heissem Wasser geregelt werden. Die Lufttemperatur im ersten Milieu der Aufheizzone 2, d.h. in Produktflussrichtung F am Anfang der Aufheizzone 2, wird durch Änderung der Durchflussmenge durch die Wärmetauscher 4 geregelt, wobei bevorzugt eine Wasserpumpe 14 mit Frequenzumformer eingesetzt wird.

Während des Verfahrens zum Trocknen werden die Teigwaren von einer ersten Behandlungszone 2 in eine zweite Behandlungszone 3 eingebracht, wobei die zweite Behandlungszone der Haupttrockner 3 ist. Die Temperatur in der ersten Behandlungszone, d.h. der Aufheizzone 2, ist im Durchschnitt niedriger als in der zweiten Behandlungszone 3. Die zu trocknenden Teigwaren gelangen mit einer Temperatur von ca. 75°C und 20% H₂O in den Haupttrockner 3, worin sie kontinuierlich auf ca. 86°C und 12% H₂O aufgeheizt und getrocknet werden.

Der Haupttrockner 3 weist mehrere Wasser-Luft-Wärmetauscher 5 auf, die in Serie angeschlossen sind und durch welche das Heizwasser dem Produktfluss F entgegen strömt. Mehrere Ventilatoren 13 bewegen das Trocknungsmedium, die Luft, welche durch die in Serie angeschlossenen Wärmetauscher 5 kontinuierlich aufgeheizt wird. Kleine Temperatursprünge sind von einem zum nächsten Ventilator 13 vorteilhaft, wodurch ein Verkleben der zu trocknenden Teigwaren verhindert wird, da kleine Temperaturdifferenzen zwischen der Produkttemperatur und dem Taupunkt im folgenden Milieu des Trockners 1 auftreten.

Das in den Haupttrockner 3 geführte Heizwasser wird aus zwei Strömen generiert:
1. Das Wasser des Rücklaufs des Haupttrockners 3 und
2. Beimischen von Frischwasser.

Die Wärmetauscher 5 in der zweiten Behandlungszone, dem Haupttrockner 3, sind so gross dimensioniert, dass mit kleinen Temperaturdifferenzen zwischen Wasser und Luft die benötigte Heizleistung ausgetauscht werden kann. Das Heizwasser durchströmt entgegen dem Produktfluss F mit einer Temperatur zwischen 80 und 120°C, bevorzugt 102°C, durch die in Serie angeschlossenen Wasser-Luft-Wärmetauscher 5 des Haupttrockners 3. Dadurch wird das Trockenmedium dem Produktfluss F folgend in dem Haupttrockner 3 kontinuierlich von ca. 82°C und 80% relative Feuchte auf ca. 97°C und 64% relative Feuchte aufgeheizt. Der serielle Wärmetauscher-Anschluss ergibt bei kleinem Wasserfluss eine hohe Temperaturdifferenz des Heizwassers. Dadurch ergibt sich eine relativ tiefe Rücklauftemperatur.

Die benötigte Frischluft wird direkt aus der vorgehenden Aufheizzone 2 in den Haupttrockner 3 gesaugt. Am Ende des Haupttrockners 3 wird die Abluft geregelt aus dem Trockner 1,3 abgesaugt. Dadurch wird die relative Luftfeuchte im letzten Milieu geregelt. Das Heizwasser des Haupttrockners 3 wird mit einer Pumpe 15 ständig umgewälzt. Die Lufttemperatur im letzten Element des Haupttrockners 3 wird durch Entnahme von kaltem Wasser und Beimischen von heissem Wasser geregelt. Die Lufttemperatur im ersten Element des Haupttrockners 3 wird durch Änderung der Durchflussmenge durch die Wärmetauscher 5 mit einer Wasserpumpe 15 mit Frequenzumformer geregelt.

In der erfindungsgemässen Vorrichtung erfolgt die Wärmerückgewinnung in zwei Stufen. In der ersten Stufe ist in den Wasser-Heizkreislauf der Aufheizzone 2 ein Luft-Wasser-Wärmetauscher 6 in den Rücklauf eingebaut. Die Abluft aus der Aufheizzone 2 und des Haupttrockners 3 wird durch diesen Wärmetauscher 6 geleitet und gibt grösstenteils durch Auskondensierung der Luftfeuchtigkeit Wärme an das Heizwasser der Aufheizzone ab. Dadurch wird ein Teil der Heizleistung (ca. 70%) der Aufheizzone 2 ungeregelt aus der Abluft zurückgewonnen. Das Rücklaufwasser wird von ca. 46°C über den Wärmetauscher 6 durch die Abluft des Haupttrockners auf ca. 72°C aufgeheizt.

Für die Wärmerückgewinnung in der zweiten Stufe wird ein zusätzlicher Wasser-Heizkreislauf aufgebaut und mit einer zusätzlichen Pumpe 16 umgewälzt. Zur Speisung dieses Heizkreislaufes wird ein Luft-Wasser-Wärmetauscher 7 in die Abluftleitung des Haupttrockners 3 eingebaut. Auch dieser Wärmetauscher 7 nützt hauptsächlich die Kondensationsenergie aus der Abluft. Der Vorlauf des Heizwassers in diesem Kreislauf erreicht ungeregelt ca. 84°C. Mit diesem Wasser wird über einen Wasser-Wasser-Wärmetauscher 8 der Rücklauf der Aufheizzone 2 geregelt weiter von ca. 72°C auf ca. 80°C aufgeheizt. Zusätzlich wird mit diesem Kreislauf das Speisewasser für die Teigbereitung geregelt auf die gewünschte Temperatur mit Hilfe eines Wasser-Wasser-Wärmetauschers 9 aufgeheizt. Somit entfällt der bisher für die Speisewassererwärmung benötigte Energieeintrag.

Zusätzlich wird mit diesem Wasser-Heizkreislauf die Frischluft für die Belüftungshaube des Behängers geregelt vorgeheizt. Dazu sind zwei zusätzliche Wasser-Luft-Wärmetauscher 10,11 vorgesehen, so dass für die Belüftungshaube nur noch ca. ¼ des herkömmlichen Energieeintrags von aussen zugeführt werden muss.

Der Rücklauf aller Wärmetauscher 8,9,10 wird wieder zusammen gemischt und durch den Abluft-Wärmetauscher 7 gepumpt.

Durch das erfindungsgemässe Verfahren und die Vorrichtung kann durch die Wärmerückgewinnung, bezogen auf die thermische Heizleistung, eine Energieeinsparung in der gesamten Anlage 1 von ca. 60% erreicht werden. Die kostengünstigen Bauteile, wie z.B. Wärmetauscher, weisen geringe Baugrössen auf, so dass sie einfach in die komplette Trocknungsanlage 1 zu integrieren sind. Durch den kompakten konstruktiven Aufbau der Anlage ist ein geringerer Platzbedarf am Produktionsstandort und nur ein Abluft-System nötig. Ferner ist nur ein Frischluft-Zuführsystem für beide Trockenzonen nötig, wodurch sich eine geringere Verrohrung der Anlage ergibt.

## Patentansprüche

1. Verfahren zum Trocknen von Teigwaren, insbesondere zur Konvektionstrocknung von Teigwaren, wobei die Teigwaren von einer ersten Behandlungszone (2) in eine zweite Behandlungszone (3) eines Trockners (1) eingebracht werden, **dadurch gekennzeichnet, dass** die Temperatur im Durchschnitt über die erste Behandlungszone (2) niedriger ist als in der zweiten Behandlungszone (3) und die aus der Abluft der ersten und/oder zweiten Behandlungszone (2,3) in wenigstens einem Wärmetauscher (6,7,8) gewonnene Energie zumindest teilweise in die erste Behandlungszone (2) eingebracht wird, insbesondere über wenigstens einen Wärmeübertrager (4) in der ersten Behandlungszone (2).

2. Verfahren nach Anspruch 1, **dadurch gekennzeichnet, dass** ein Trocknungsmedium, insbesondere Luft, in der ersten und/oder zweiten Behandlungszone (2,3) an wenigstens einem in der Behandlungszone (2,3) angeordneten Wärmeübertrager (4,5) vorbei geführt und erhitzt wird.

3. Verfahren nach einem der vorangehenden Ansprüche, **dadurch gekennzeichnet, dass** in der ersten Behandlungszone (2) in Produktflussrichtung (F)
- die Temperatur des Trocknungsmediums ansteigt, vorzugsweise kontinuierlich ansteigt;
- die Temperatur der Teigwaren ansteigt;
- die absolute Feuchtigkeit des Trocknungsmediums ansteigt; und
- der Wassergehalt der Teigwaren sinkt.

4. Verfahren nach einem der vorangehenden Ansprüche, **dadurch gekennzeichnet, dass** in der zweiten Behandlungszone (3) in Produktflussrichtung (F)
- die Temperatur des Trocknungsmediums verändert wird, insbesondere ansteigt, vorzugsweise kontinuierlich ansteigt;
- die Temperatur der Teigwaren ansteigt;
- die absolute Feuchtigkeit des Trocknungsmediums ansteigt; und
- der Wassergehalt der Teigwaren sinkt.

5. Verfahren nach einem der vorangehenden Ansprüche, **dadurch gekennzeichnet, dass** dem wenigstens einen Wärmeübertrager (4) in der ersten Behandlungszone (2) Wasser zugeführt wird, welches über wenigstens einen Wärmetauscher (6,7,8) von der Abluft der ersten und/oder zweiten Behandlungszone (2,3) erwärmt wird.

6. Verfahren nach Anspruch 5, **dadurch gekennzeichnet, dass** dem den Wärmeübertragern (4,5) in der ersten und/oder zweiten Behandlungszone (2,3) zuströmenden Wasser heisseres Wasser beigemischt wird.

7. Verfahren nach einem der vorangehenden Ansprüche, **dadurch gekennzeichnet, dass** die in der ersten und/oder zweiten Behandlungszone (2,3) vorhandene Energie zur Erhitzung von Speisewasser und/oder weitere Zonen des Trockners (1), insbesondere eines Behängers, genutzt wird.

8. Verfahren nach einem der vorangehenden Ansprüche, **dadurch gekennzeichnet, dass** die den Haupttrockner (3) verlassenden Teigwaren in eine Stabilisationszone und/oder Auffeuchtzone und/oder Kühlzone eingebracht werden.

9. Verfahren nach einem der vorangehenden Ansprüche, **dadurch gekennzeichnet, dass** in der ersten und/oder zweiten Behandlungszone (2,3) innere Wärmeübertrager (4,5) in Serie geschaltet sind und von einem Fluid, insbesondere Wasser, entgegen der Produktflussrichtung (F) durchströmt werden.

10. Verfahren nach Anspruch 8, **dadurch gekennzeichnet, dass** die Temperatursprünge zwischen Milieus in der ersten und/oder zweiten Behandlungszone (2,3), die aufeinander folgenden Wärmeübertrager (4,5) zugeordnet sind, nur klein sind, insbesondere nicht grösser als 12°C, vorzugsweise nicht grösser als 8°C, besonders bevorzugt nicht grösser als 4°C.

11. Vorrichtung (1) zum Trocknen von Teigwaren, insbesondere zur Konvektionstrocknung von Teigwaren, mit wenigstens zwei Behandlungszonen (2,3) durch die die Teigwaren transportiert werden **dadurch gekennzeichnet, dass** die erste Behandlungszone (2) und/oder die zweite Behandlungszone (3) jeweils wenigstens einen inneren Wärmeübertrager (4,5), insbesondere Wasser-Luft-Wärmetauscher, aufweisen, und wobei die aus der ersten und/oder zweiten Behandlungszone (2,3) in wenigstens einem äusseren Wärmetauscher (6,7,8,9,10,11) gewinnbare Energie in die erste Behandlungszone (2) einbringbar ist, insbesondere über den wenigstens einen Wärmeübertrager (4) in der ersten Behandlungszone (2).

12. Vorrichtung nach Anspruch 11, **dadurch gekennzeichnet, dass** die erste und/oder die zweite Behandlungszone (2,3) jeweils wenigstens einen oder eine Mehrzahl von in Serie angeordnete innere Wärmeübertrager (4,5) aufweist.

13. Vorrichtung nach einem der Ansprüche 11 und 12, **dadurch gekennzeichnet, dass** wenigstens ein äusserer Wärmetauscher (6,7,8,9,10,11) dem/den inneren Wärmeübertragern (4,5) der ersten und/oder zweiten Behandlungszone (2,3) nachgeordnet ist.

14. Vorrichtung nach einem der Ansprüche 11 bis 13, **dadurch gekennzeichnet, dass** die von der ersten Behandlungszone (2) und/oder der zweiten Behandlungszone (3) abführbare Abluft einem äusseren Wärmetauscher (6,7,8,9,10,11) zuführbar ist, wobei die in dem äusseren Wärmetauscher (6,7,8,9,10,11) gewinnbare Energie in den/die inneren Wärmeübertrager (4,5) der ersten und/oder zweiten Behandlungszone (2,3) rückführbar ist.

15. Vorrichtung nach einem der Ansprüche 11 bis 14, **dadurch gekennzeichnet, dass** die Vorrichtung (1) derart ausgebildet ist, dass die der zweiten Behandlungszone (3) zuzuführende Frischluft der Abluft der ersten Behandlungszone (2) entnehmbar ist, vorzugsweise aus der ersten Behandlungszone (2) an deren Ende absaugbar ist.

## Claims

1. Method for the drying of pastas, in particular for the convection drying of pastas, the pastas being introduced from a first treatment zone (2) into a second treatment zone (3) of a dryer (1), **characterized in that** the temperature is on average lower over the first treatment zone (2) than in the second treatment zone (3), and the energy obtained from the exhaust air of the first and/or the second treatment zone (2, 3) in at least one heat exchanger (6, 7, 8) is introduced at least partially into the first treatment zone (2), in particular via at least one heat exchanger (4) in the first treatment zone (2).

2. Method according to Claim 1, **characterized in that** a drying medium, in particular air, in the first and/or the second treatment zone (2, 3) is led past at least one heat exchanger (4, 5) arranged in the treatment zone (2, 3) and is heated.

3. Method according to one of the preceding claims, **characterized in that** in the first treatment zone (2), in the product flow direction (F),
- the temperature of the drying medium rises, preferably rises continuously;
- the temperature of the pastas rises;
- the absolute moisture of the drying medium rises; and
- the water content of the pastas falls.

4. Method according to one of the preceding claims, **characterized in that** in the second treatment zone (3), in the product flow direction (F),
- the temperature of the drying medium is varied, in particular rises, preferably rises continuously;
- the temperature of the pastas rises;
- the absolute moisture of the drying medium rises; and
- the water content of the pastas falls.

5. Method according to one of the preceding claims, **characterized in that** the at least one heat exchanger (4) in the first treatment zone (2) is supplied with water which is heated via at least one heat exchanger (6, 7, 8) by the exhaust air of the first and/or the second treatment zone (2, 3).

6. Method according to Claim 5, **characterized in that** hotter water is admixed to the water flowing to the heat exchangers (4, 5) in the first and/or the second treatment zone (2, 3).

7. Method according to one of the preceding claims, **characterized in that** the energy present in the first and/or the second treatment zone (2, 3) is used for heating feed water and/or further zones of the dryer (1), in particular of a spreader.

8. Method according to one of the preceding claims, **characterized in that** the pastas leaving the main dryer (3) are introduced into a stabilization zone and/or moistening zone and/or cooling zone.

9. Method according to one of the preceding claims, **characterized in that**, in the first and/or the second treatment zone (2, 3), inner heat exchangers (4, 5) are connected in series and have a fluid, in particular water, flowing through them counter to the product flow direction (F).

10. Method according to Claim 8, **characterized in that** the temperature jumps between areas in the first and/or the second treatment zone (2, 3) which are assigned to successive heat exchangers (4, 5) are only small, in particular no greater than 12°C, preferably no greater than 8°C, especially preferably no greater than 4°C.

11. Apparatus (1) for the drying of pastas, in particular for the convection drying of pastas, having at least two treatment zones (2, 3) through which the pastas are transported, **characterized in that**
the first treatment zone (2) and/or the second treatment zone (3) have/has in each case at least one inner heat exchanger (4, 5), in particular water/air heat exchanger, and the energy obtainable from the first and/or the second treatment zone (2, 3) in at least one outer heat exchanger (6, 7, 8, 9, 10, 11) can be introduced into the first treatment zone (2), in particular via the at least one heat exchanger (4) in the first treatment zone (2).

12. Apparatus according to Claim 11, **characterized in that** the first and/or the second treatment zone (2, 3) has/have in each case at least one or a plurality of inner heat exchangers (4, 5) arranged in series.

13. Apparatus according to either of Claims 11 and 12, **characterized in that** at least one outer heat exchanger (6, 7, 8, 9, 10, 11) follows the inner heat exchanger or inner heat exchangers (4, 5) of the first and/or the second treatment zone (2, 3).

14. Apparatus according to one of Claims 11 to 13, **characterized in that** the exhaust air dischargeable from the first treatment zone (2) and/or the second treatment zone (3) can be supplied to an outer heat exchanger (6, 7, 8, 9, 10, 11), the energy obtainable in the outer heat exchanger (6, 7, 8, 9, 10, 11) being recirculatable into the inner heat exchanger or inner heat exchangers (4, 5) of the first and/or the second treatment zone (2, 3).

15. Apparatus according to one of Claims 11 to 14, **characterized in that** the apparatus (1) is designed in such a way that the fresh air to be supplied to the second treatment zone (3) can be extracted from the exhaust air of the first treatment zone (2), preferably can be sucked away from the first treatment zone (2) at its end.

## Revendications

1. Procédé pour le séchage de produits à base de pâte, en particulier pour le séchage par convection de produits à base de pâte, dans lequel les produits à base de pâte sont transférés d'une première zone de traitement (2) vers une deuxième zone de traitement (3) d'un dispositif de séchage (1), **caractérisé en ce que** la température moyenne est plus basse au-dessus de la première zone de traitement (2) que dans la deuxième zone de traitement (3), et l'énergie récupérée dans au moins un échangeur de chaleur (6, 7, 8), à partir de l'air d'évacuation de la première et/ou de la deuxième zone de traitement (2, 3), est alimentée au moins partiellement dans la première zone de traitement (2), en particulier par au moins un caloporteur (4) dans la première zone de traitement (2).

2. Procédé selon la revendication 1, **caractérisé en ce qu'**un milieu de séchage, en particulier de l'air, est conduit dans la première et/ou la deuxième zone de traitement (2, 3), devant au moins un caloporteur (4, 5) installé dans la zone de traitement (2, 3), et chauffé.

3. Procédé selon l'une des revendications précédentes, **caractérisé en ce que** dans la première zone de traitement (2), dans le sens d'écoulement du produit (F) _{:}
- la température du milieu de séchage augmente, de préférence de façon continue ;
- la température des produits à base de pâte augmente ;
- l'humidité absolue du milieu de séchage augmente ; et
- la teneur en eau des produits à base de pâte baisse.

4. Procédé selon l'une des revendications précédentes, **caractérisé en ce que** dans la deuxième zone de traitement (3), dans le sens d'écoulement du produit (F) :
- la température du milieu de séchage est modifiée, en particulier augmentée, de préférence augmentée de façon continue ;
- la température des produits à base de pâte augmente ;
- l'humidité absolue du milieu de séchage augmente ; et
- la teneur en eau des produits à base de pâte baisse.

5. Procédé selon l'une des revendications précédentes, **caractérisé en ce que** de l'eau chauffée par au moins un échangeur de chaleur (6, 7, 8), au moyen de l'air d'évacuation de la première et/ou de la deuxième zone de traitement (2, 3), est alimentée vers l'au moins un caloporteur (4) dans la première zone de traitement (2).

6. Procédé selon la revendication 5, **caractérisé en ce que** de l'eau plus chaude est mélangée à l'eau affluant vers les caloporteurs (4, 5) dans la première et/ou la deuxième zone de traitement (2, 3).

7. Procédé selon l'une des revendications précédentes, **caractérisé en ce que** l'énergie disponible dans la première et/ou la deuxième zone de traitement (2, 3) est utilisée pour chauffer de l'eau d'alimentation et/ou d'autres zones du dispositif de séchage (1), en particulier une étendeuse.

8. Procédé selon l'une des revendications précédentes, **caractérisé en ce que** les produits à base de pâte quittant le dispositif de séchage principal (3) sont introduits dans une zone de stabilisation et/ou une zone d'humidification et/ou une zone de refroidissement.

9. Procédé selon l'une des revendications précédentes, **caractérisé en ce que** dans la première et/ou la deuxième zone de traitement (2, 3), des caloporteurs internes (4, 5) sont montés en série et traversés par un fluide, en particulier de l'eau, contre le sens d'écoulement du produit (F).

10. Procédé selon la revendication 8, **caractérisé en ce que** les écarts de température entre les milieux dans la première et/ou la deuxième zone de traitement (2, 3), qui sont attribuées à des caloporteurs (4, 5) consécutifs, sont seulement petits, en particulier pas supérieurs à 12°C, de préférence pas supérieurs à 8°C, et mieux, pas supérieurs à 4°C.

11. Dispositif (1) pour le séchage de produits à base de pâte, en particulier pour le séchage par convection de produits à base de pâte, avec au moins deux zones de traitement (2, 3), à travers lesquelles sont transportés les produits à base de pâte, **caractérisé en ce que**
la première zone de traitement (2) et/ou la deuxième zone de traitement (3) comportent chacune au moins un caloporteur interne (4, 5), en particulier un échangeur de chaleur eau-air, et dans laquelle l'énergie récupérable à partir de la première et/ou de la deuxième zone de traitement (2, 3), dans au moins un échangeur de chaleur externe (6, 7, 8, 9, 10, 11), peut être alimentée dans la première zone de traitement (2), en particulier par l'au moins un caloporteur (4) dans la première zone de traitement (2).

12. Dispositif selon la revendication 11, **caractérisé en ce que** la première et/ou la deuxième zone de traitement (2, 3) comportent chacune au moins un caloporteur, ou une pluralité de caloporteurs internes (4, 5) montés en série.

13. Dispositif selon l'une des revendications 11 ou 12, **caractérisé en ce qu'**au moins un échangeur de chaleur externe (6, 7, 8, 9, 10, 11) est installé en aval du/des caloporteurs internes (4, 5) de la première et/ou de la deuxième zone de traitement (2, 3).

14. Dispositif selon l'une des revendications 11 à 13, **caractérisé en ce que** l'air d'évacuation susceptible d'être prélevé à partir de la première zone de traitement (2) et/ou de la deuxième zone de traitement (3), peut être alimenté vers un échangeur de chaleur externe (6, 7, 8, 9, 10, 11), où l'énergie récupérable dans l'échangeur de chaleur externe (6, 7, 8, 9, 10, 11) peut être renvoyée dans le/les caloporteurs internes (4, 5) de la première et/ou de la deuxième zone de traitement (2, 3).

15. Dispositif selon l'une des revendications 11 à 14, **caractérisé en ce que** le dispositif (1) est conçu de manière à ce que l'air frais à alimenter vers la deuxième zone de traitement (3) puisse être prélevé à partir de l'air d'évacuation de la première zone de traitement (2), en étant de préférence aspiré à partir de la première zone de traitement (2), à l'extrémité de celle-ci.
